# EUROPÄISCHE PATENTSCHRIFT

(11) **EP 3 254 801 B1**
(45) Veröffentlichungstag und Bekanntmachung des Hinweises auf die Patenterteilung: **03.04.2019**
(21) Anmeldenummer: 16173629.3
(22) Anmeldetag: 09.06.2016
(51) Int. Cl.: B23Q 1/76, B23Q 17/00

(54) **LÜNETTE MIT EINER KRAFTMESSEINRICHTUNG**
STATIONARY SUPPORT WITH A FORCE MEASURING DEVICE
LUNETTE AVEC CAPTEUR DE FORCE

(43) Veröffentlichungstag der Anmeldung: 13.12.2017
(73) Patentinhaber: SMW-AUTOBLOK Spannsysteme GmbH, 88074 Meckenbeuren (DE)
(72) Erfinder: MAURER, Eckhard, 88094 Oberteuringen (DE)
(74) Vertreter: Engelhardt, Volker

(56) Entgegenhaltungen:
- EP-A1- 2 540 438
- DE-A1- 3 137 149
- DE-A1-102014 202 263
- DE-U1-202009 004 439
- JP-A- H10 118 892

## Beschreibung

Die Erfindung bezieht sich auf eine Lünette zur Zentrierung eines rotationssymmetrischen Werkstückes bezogen auf eine Längsachse einer Bearbeitungsmaschine nach dem Oberbegriff des Patentanspruches 1.

Solche Lünetten, die beispielsweise durch die EP 2 540 438 A1 bekannt geworden sind, werden seit Jahrzehnten dazu benutzt, rotationssymmetrische Werkstücke während des Bearbeitungsvorganges einer Bearbeitungsmaschine im Raum abzustützen, um die Durchbiegung der Werkstücke aufzufangen oder zumindest sehr gering zu halten. Oftmals handelt es sich bei den zu bearbeitenden Werkstücken um Wellen oder Achsen für Elektromotoren, die eine Länge von mehreren Metern aufweisen. Zudem treten aufgrund der Bearbeitungskräfte an unterschiedlichen Positionen während der Bearbeitungsvorgänge Krafteinwirkungen auf, durch die die Werkstücke verschoben werden können, wenn diese durch die Lünetten nicht zuverlässig gegen Durchbiegung und anderen Auslenkungen abgestützt sind.

Derartige Lünetten sind in einer Vielzahl von unterschiedlichen konstruktiven Ausgestaltungen bekannt geworden. Üblicherweise wird die erforderliche Spannkraft mittels eines axial in den Gehäuseschalen beweglich angeordneten Betätigungskolben erzeugt, der trieblich mit den drei Lünettenarmen verbunden ist. Die beiden äußeren Lünettenarme sind dabei verschwenkbar an den Gehäuseschalen angeordnet und vollziehen um einen den Gehäuseschalen zugeordneten Lagerbolzen eine Verschwenkbewegung, so dass beim Zurückziehen des Betätigungskolbens die beiden äußeren Lünettenarme aufschwenken und der mittlere Lünettenarm zurückgezogen ist. Beim Zustellen der drei Lünettenarmen durch den Betätigungskolben vollziehen die beiden äußeren Lünettenarme eine Schwenkbewegung in Richtung auf das Werkstück und der mittlere Lünettenarm wird axial auf dieses zugestellt. Die Bewegungen der drei Lünettenarmen erfolgt demnach synchron, so dass diese gleichzeitig auf die Oberfläche des Werkstückes auftreffen und auch eine identische Haltekraft auf das einzuspannende Werkstück ausüben, die im Wesentlichen von dem Betätigungskolben aufgebracht ist.

Zudem ist es bekannt, die von dem Zustellkolben oder Betätigungskolben aufgebrachten Spannkräfte zu erfassen. Beispielsweise sind Sensoren an diesem vorgesehen, die mögliche Verformungen des Betätigungskolbens erfassen und daraus durch mathematische bzw. physikalische Berechnungen Kraftmesswerte ermittelt werden können, die mit den tatsächlichen Spannkräften aufgrund von Erfahrungswerten und sonstigen Korrelationsmaßnahmen in Beziehung gesetzt werden können.

Nachteiligerweise hat sich herausgestellt, dass die an dem Betätigungskolben erfassten Zustellkräfte oftmals nicht exakt mit den tatsächlichen Spannkräften, die zwischen den Lünettenarmen und dem einzuspannenden Werkstück auftreten, in Verbindung stehen, denn einerseits kann durch unterschiedliche Werkstoffeigenschaften des Werkstückes je nach Härte des verwendeten Materials, eine entsprechende Fehlerquelle entstehen und zum anderen liegt zwischen der Auftreffposition der jeweiligen Lünettenarmen und dem Betätigungskolben geometrisch bedingte Abweichungen vor, die aufgrund Materialverschleißes an den Lünettenarmen bzw. deren Bauteilen weitere Fehlerquellen entstehen lassen.

Es ist daher Aufgabe der Erfindung, eine Lünette der eingangs genannten Gattung derart weiterzubilden, dass zuverlässig die tatsächlich auftretenden Spannkräfte der Lünettenarme erfasst sind und zur Weiterverarbeitung an eine Auswerteeinrichtung weitergegeben sind, um in Abhängigkeit des verwendeten Werkstoffes des Werkstückes und den geometrischen bzw. mechanischen Verhältnissen an der Lünette eine exakte Berechnung der tatsächlich wirkenden Spannkräfte auf das Werkstück zu erhalten.

Diese Aufgabe ist erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Dadurch, dass an mindestens einem der beiden äußeren Lünettenarmen eine Kraftmesseinrichtung vorgesehen ist, durch die die Spannkraft des jeweiligen äußeren Lünettenarmes während des Spannzustandes erfasst und an eine Auswerteeinrichtung weitergeleitet ist, ist gewährleistet, dass die von dem einen äußeren Lünettenarm auf das Werkstück ausgeübte Spann- bzw. Haltekraft durch die Messeinrichtung erfasst ist und dass das entsprechende Messsignal an eine Auswerteeinrichtung zur Weiterverarbeitung permanent ausgegeben werden kann, so dass auch während des Bearbeitungsvorganges ständig eine Überwachung der tatsächlich vorherrschenden Spannkräfte ermöglicht ist.

Prinzipiell kann die Kraftmessung an jeder beliebigen Stelle zwischen dem freien Ende eines der beiden äußeren Lünettenarmen und dessen Lagerung an den Gehäuseschalen erfolgen. Zu diesem Zweck schlägt die Patentanmeldung zwei unterschiedliche Befestigungspositionen für eine erfindungsgemäße Kraftmesseinrichtung vor. Zunächst kann die Kraftmesseinrichtung dem Lagerbolzen zugeordnet sein bzw. der Lagerbolzen kann als Kraftmessachse ausgestaltet sein, an dem ein oder mehrere Dehnmessstreifen an bestimmten Stellen angebracht sind. Die Dehnmessstreifen liegen dabei beispielsweise an einer Schwachstelle der Kraftmessachse. Die Schwachstelle der Kraftmessachse wird dadurch erreicht, dass in diese eine Nut eingearbeitet ist. Sobald entsprechende Kräfte übertragen werden, wird sich im Bereich der Nut eine erhöhte Verformung einstellen, die von den Dehnmessstreifen erfasst und an die Auswerteeinrichtung weitergegeben ist.

Solche Schwachstellen können auch durch Sacklochbohrungen, die in der Nut angeordnet sind, weiter gesteigert werden, ohne dass die Festigkeit des Lagerbolzens bzw. der Kraftmessachse insgesamt geschwächt ist. Folglich kann die Verschwenkung der jeweiligen Lünettenarme und die zuverlässige Kraftübertragung durch diese gewährleistet sein und gleichzeitig sind die Kraftverläufe durch diese künstlich geschaffenen Schwachstellen geleitet, an deren Position jeweils ein oder mehrere Dehnmessstreifen angeordnet ist bzw. sind.

Desweiteren kann die an dem freien Ende der äußeren Lünettenarme angebrachte Rolle als unmittelbar an der Oberfläche des einzuspannenden Werkstückes anliegend zur Kraftmessung herangezogen werden, wenn nämlich deren Lagerachse als Kraftmessachse verwendet wird. Auch für die Kraftmessachse der jeweiligen Lagerollen können entsprechende Schwachstellen in Form von Nuten und Sacklochbohrungen vorgesehen sein, in denen dann die Dehnmessstreifen angeordnet sind.

Die Anordnung der Dehnmessstreifen unabhängig von deren tatsächlichen Position, beispielsweise in der Lagerachse der Rolle oder dem Lagerbolzen des Lünettenarmes sind diese im Bereich des Kraftverlaufes angebracht und verlaufen parallel zu diesen. Folglich wirken sich die entsprechenden Kraftveränderungen unverzüglich und ohne Beeinträchtigung auf die Dehnmessstreifen aus, so dass permanent und ohne mechanische oder geometrische Einwirkungen die tatsächlichen Haltekräfte der drei Lünettenarme auf das Werkstück erfasst und an die Auswerteeinrichtung zur weiteren Verarbeitung übermittelt werden können.

Die derart erfassten Kraftmesswerte dienen folglich zur Auswertung über den tatsächlichen Einspannzustand der drei Lünettenarme an dem Werkstück und liefern dem Benutzer dieser erfindungsgemäßen Lünetten einen exakten Zustandsbericht über die tatsächlich vorherrschende Einspannkraft der drei Lünettenarme auf das Werkstück in Abhängigkeit von dem von dem Betätigungskolben aufgebrachten axialen Kraftaufwand, da dieser durch weitere Sensoren gemessen bzw. errechnet werden kann, wenn nämlich die verwendeten Antriebsmittel, beispielsweise deren Drehmoment oder Betätigungskräfte bekannt sind.

Es ist offensichtlich, dass mehrere Kraftmesseinrichtungen an unterschiedlichen Positionen eingesetzt werden können.

In der Zeichnung sind zwei erfindungsgemäße Ausführungsbeispiele einer Lünette dargestellt, die nachfolgend näher erläutert sind. Im Einzelnen zeigt:
- Figur 1: eine Lünette mit einem aus zwei Gehäuseschalen bestehenden Gehäuse, an dem drei Lünettenarme verschwenkbar bzw. axial beweglich gelagert sind und in dem ein Betätigungskolben, der trieblich mit den drei Lünettenarmen gekoppelt ist, angeordnet ist, wobei an einem der beiden äußeren Lünettenarme ein Lagerbolzen vorgesehen ist, der als Kraftmessachse ausgestaltet ist,
- Figur 2: die Lünette gemäß Figur 1 mit einem schematisch dargestellten Kraftverlauf zwischen der Einspannposition eines Werkstückes und der Kraftübertragung zwischen dem äußeren Lünettenarm und dem Betätigungskolben,
- Figur 3: ein Schnitt gemäß Figur 2 entlang der Schnittlinie III-III durch die Messachseneinrichtung sowie einer elektrische Koppelung,
- Figur 4: eine Lünette gemäß Figur 1 mit einer an einem der freien Enden der äußeren Lünettenarme angebrachten Rollenachse, die als Kraftmessachse dient,
- Figur 5: ein Schnitt entlang der Schnittlinie V-V gemäß Figur 4,
- Figur 6: eine Lünette gemäß Figur 1 mit einer auf einem der äußeren Lünettenarme angebrachten Kraftmesseinrichtung, in perspektivischer Ansicht, die nicht unter dem Schutzumfang der Ansprüche fällt, und
- Figur 7: eine vergrößerte Darstellung der Kraftmesseinrichtung gemäß Figur 6.

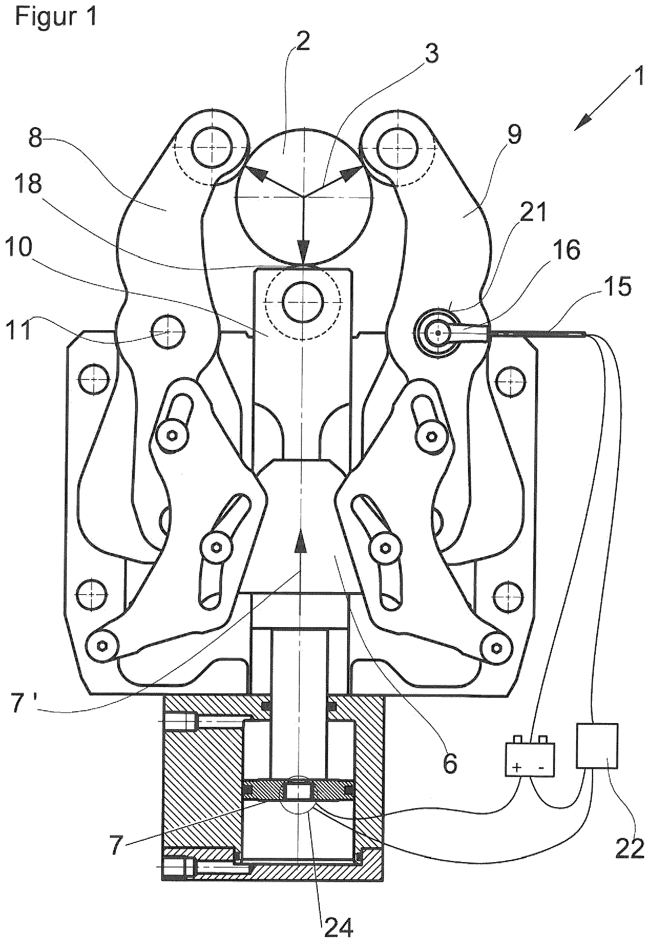

Aus Figur 1 ist eine Lünette 1 zu entnehmen, durch die ein rotationssymmetrisches Werkstück 2 mittels einer Spannkraft zentrisch im Raum gehalten werden soll. Durch derartige Lünetten 1 sollen die Werkstücke 2 möglichst koaxial zu einer Längsachse einer nicht dargestellten Werkzeugmaschine gehalten sein. Oftmals handelt es sich bei solchen Werkstücken 2 um lang bauende Wellen, die beispielsweise für einen Elektromotor vorgesehen sind und die von der Werkzeugmaschine bearbeitet werden. Während des Bearbeitungsprozesses wirken erhebliche Bearbeitungskräfte auf das jeweilige Werkstück 2 ein, so dass dieses nicht nur von der eigenen Gewichtskraft sondern auch durch die Bearbeitungskräfte aus der gewünschten Position gedrückt wird. Darüberhinaus werden die Werkstücke 2 zu deren Bearbeitung in Rotation versetzt, so dass zusätzliche Fliehkräfte wirken, die ebenfalls von der Lünette 1 abgestützt werden sollen.

Die Lünette 1 besteht aus zwei Gehäuseschalen 4, 5 in denen ein an einem Betätigungskolben 7 fest angebrachter Führungsschlitten 6 axial verschieblich gelagert ist. Die Bewegungsrichtung des Betätigungskolbens 7 erfolgt senkrecht auf die Längsachse des Werkstückes 2. Der Führungsschlitten 6 weist im Wesentlichen im Querschnitt eine dreieckförmige Kontur auf und die beiden äußeren Schenkel des Führungsschlittens 6 sind als Steuerkurve 6' ausgebildet. Der Betätigungskolben 7 ist über mechanische oder elektrische Antriebsmittel axial beweglich und erzeugt eine axiale Spannkraft 7'.

Desweiteren sind der Lünette 1 zwei äußere Lünettenarme 8, 9 und ein mittlerer Lünettenarm 10 zugeordnet, durch die das Werkstück 2 eingespannt ist. Der mittlere Lünettenarm 10 vollzieht eine axiale Zustellbewegung, denn dieser ist unmittelbar an dem Betätigungskolben 7 angebracht.

Die beiden äußeren Lünettenarme 8, 9 sind über einen Lagerbolzen 11 verschwenkbar an den Gehäuseschalen 4, 5 der Lünette 1 gelagert und vollziehen demnach eine Schwenkbewegung auf das Werkstück 2 zu, wenn dieses eingespannt werden soll bzw. von diesem weg, wenn der Bearbeitungsvorgang für das Werkstück 2 abgeschlossen und dieses aus der Werkstückmaschine entfernt werden soll, da die in den Gehäuseschalen 4, 5 verlaufenden freien Enden der Lünettenarme 8, 9 auf der Steuerkurve 6' aufliegen und somit mit diesen in permanenter Wirkverbindung stehen.

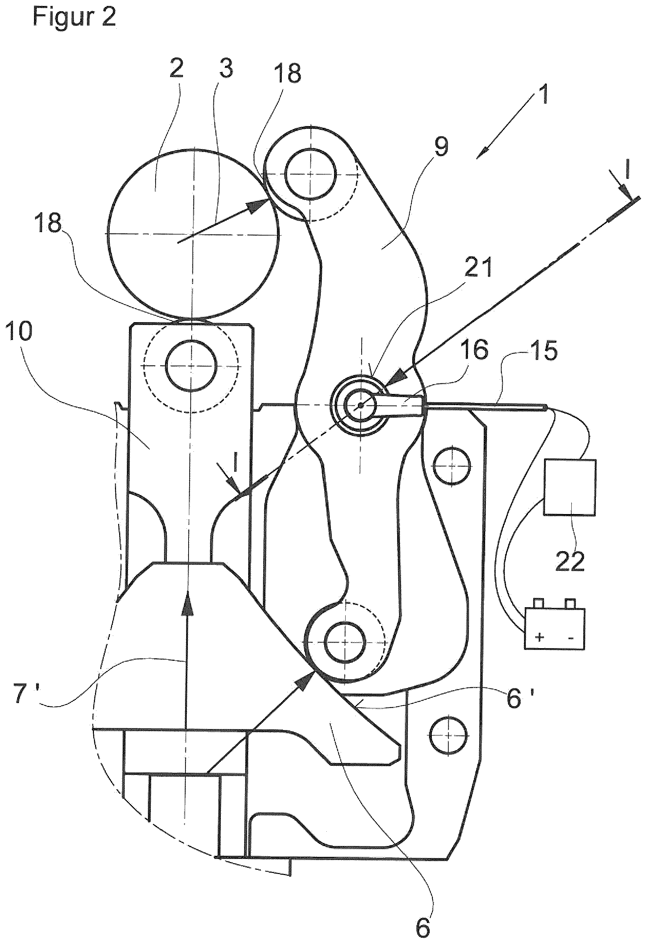

Gemäß Figur 2 ist einer der Lagerbolzen 11 des zweiten Lünettenarms 9 als Kraftmessachse 12 ausgestaltet. Die Kraftmessachse 12 sowie an dieser angebrachte Dehnmessstreifen 23 bilden eine Kraftmesseinrichtung 21, die über eine oder mehrere elektrische Leitungen 15 mit einer Auswerteeinrichtung 22 verbunden sind.

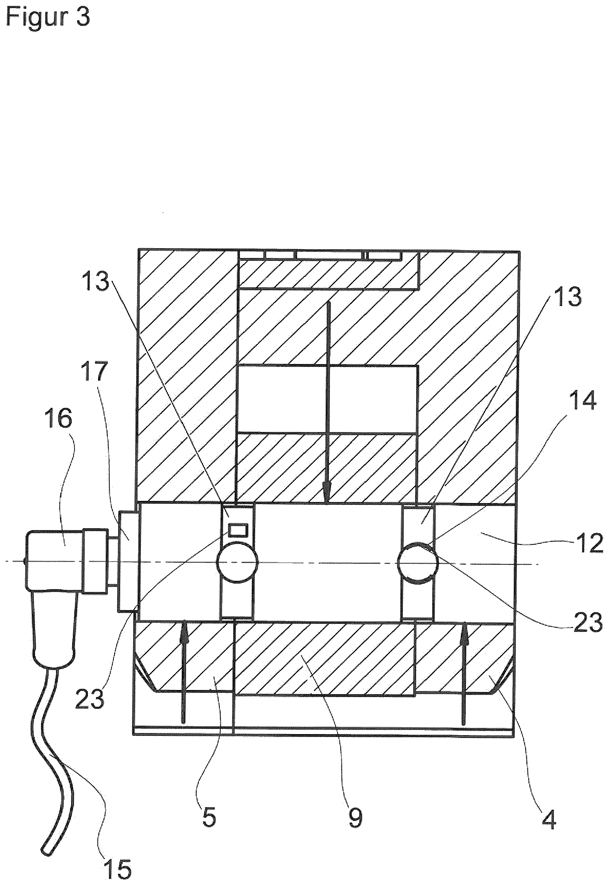

In Figur 3 ist der detaillierte konstruktive Aufbau der Kraftmessachse 12 zu entnehmen, in der nämlich zwei umlaufende Nuten 13 eingearbeitet sind, die als Schwachstelle der Kraftmessachse 12 anzusehen sind. Die von der Kraftmessachse 12 übertragenen Spannkräfte 3 führen nämlich im Bereich der jeweiligen Nut 13 dazu, dass die Kraftmessachse 12 gestaucht oder gedehnt ist. Darüberhinaus können in der jeweiligen Nut 13 eine oder mehrere Sacklochbohrungen 14 eingearbeitet sein, durch die zusätzliche Schwachpunkte bzw. Biegeverläufe in der Kraftmessachse 12 entstehen. Die Dehnmessstreifen 23 können dabei entweder in der Nut 13 oder in der Sacklochbohrung 14 befestigt sein und verlaufen üblicherweise parallel zu dem Kraftverlauf in der Kraftmessachse 12. Die Dehnmessstreifen 23 sind über die elektrischen Leitungen 15 mit einem Stecker 16 verbunden, der außerhalb des Lünettenarms 9 mit einer Steckdose 17 koppelbar ist, die über die elektrischen Leitungen 15 mit der Auswerteeinrichtung 22 verbunden ist. Folglich können die von den Dehnmessstreifen 23 erzeugten elektrischen Signale unmittelbar und permanent von der Auswerteeinrichtung 22 erfasst und entsprechend ausgewertet werden, so dass der jeweilige Betriebszustand der Lünette 1 digitalisierbar ist und die tatsächlich wirkenden Spannkräfte 3 erfasst und darstellbar sind. Somit kann für jeden Betriebszustand und zu jedem Zeitpunkt der jeweiligen Bearbeitungsvorgänge exakt ermittelt werden, welche tatsächlichen Spannkräfte 3 wirken, denn diese werden unmittelbar von der Kraftmessachse 12 erfasst und an die Dehnmessstreifen 23 übertragen.

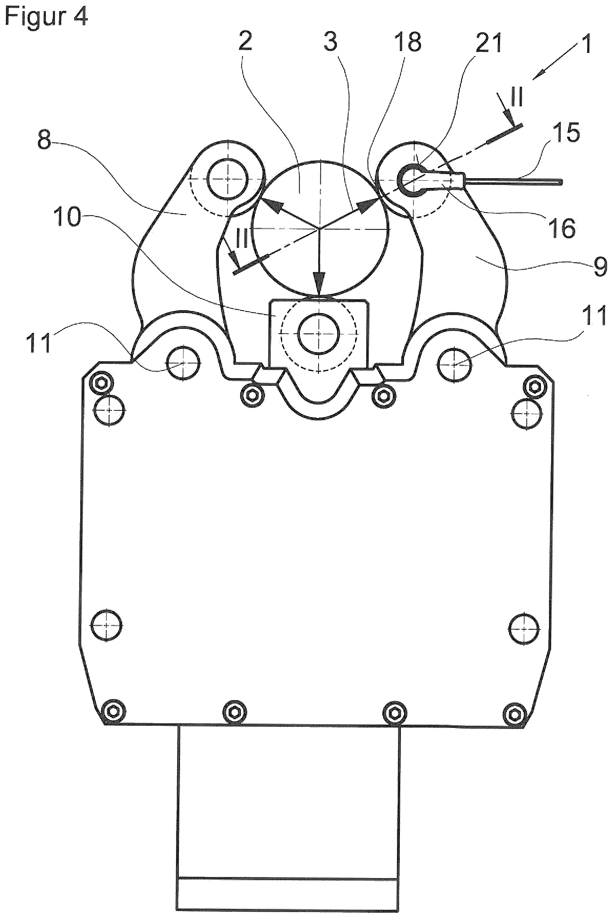

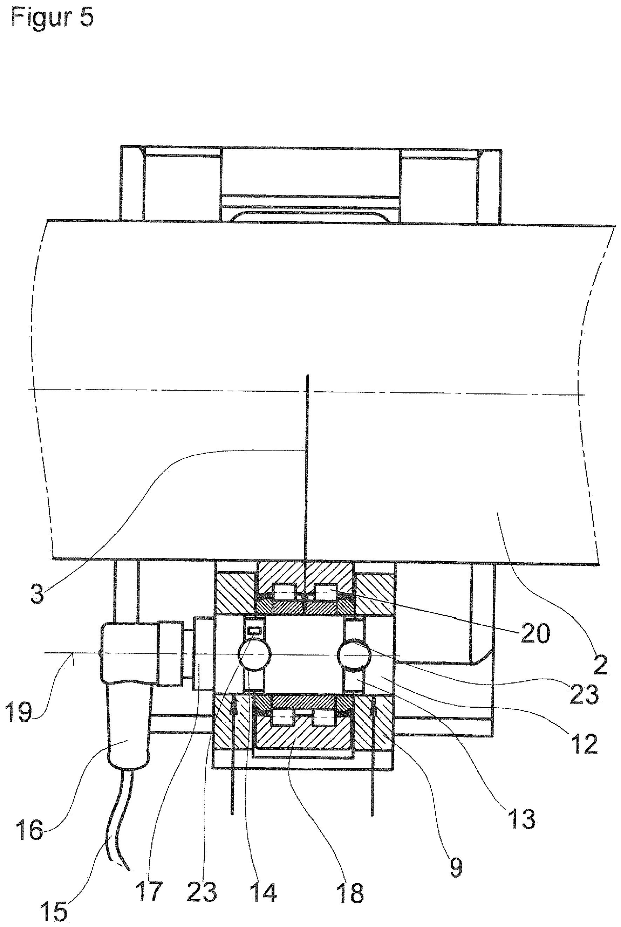

Üblicherweise sind gemäß Figur 4 die freien Enden der beiden äußeren Lünettenarme 8, 9 mit einer Rolle 18 ausgerüstet, die unmittelbar an der Oberfläche des einzuspannenden Werkstückes 2 anliegt und die über eine Rollenachse 19 drehbar mit dem jeweiligen Lünettenarm 8 bzw. 9 verbunden ist. Die Rotationsgeschwindigkeit des Werkstückes 2 wird demnach von der jeweiligen Rolle 18 aufgenommen und diese liegt unmittelbar an dem Werkstück 2 an, so dass die tatsächlich vorherrschenden Spannkräfte 3 unmittelbar auf die Rolle 18 bzw. deren Rollenachse 19 einwirken. Eine der Rollenachsen 19 ist durch die Kraftmessachse 12 ersetzt, wie dies in Figur 5 abgebildet ist. Zwischen dem Lünettenarm 9 und der Kraftmessachse 12 ist ein Lager 20 vorgesehen. Die Kraftmessachse 12 weist erneut zwei umlaufende Nuten 13 mit jeweils einer oder mehrerer Sacklochbohrungen 14 auf, in denen beispielsweise an der Wand oder dem Boden der Sacklochbohrung 14 jeweils einer oder mehrere der Dehnmessstreifen 23 befestigt ist bzw. sind. Die Dehnmessstreifen 23 sind über die elektrischen Leitungen 19 mit einem Stecker verbunden, der an eine außerhalb der Rolle vorgesehene Steckdose 17 anschließbar ist.

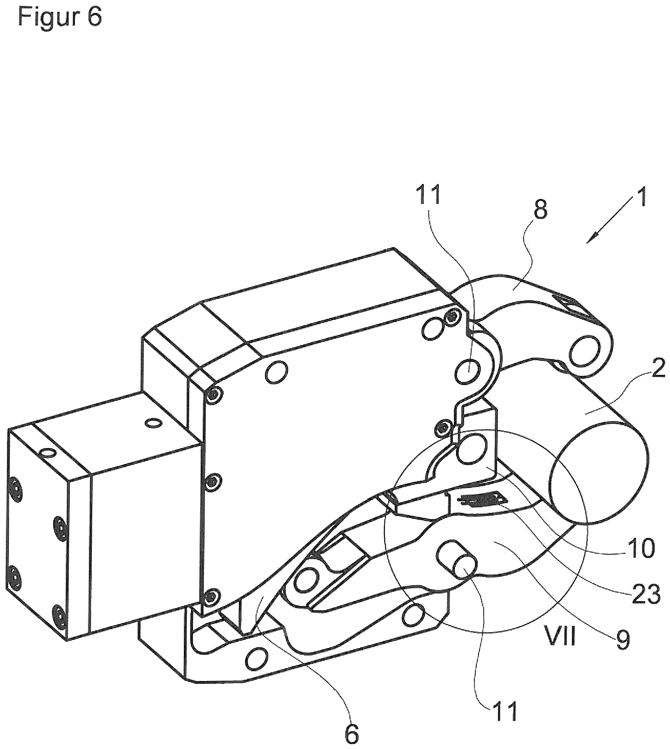

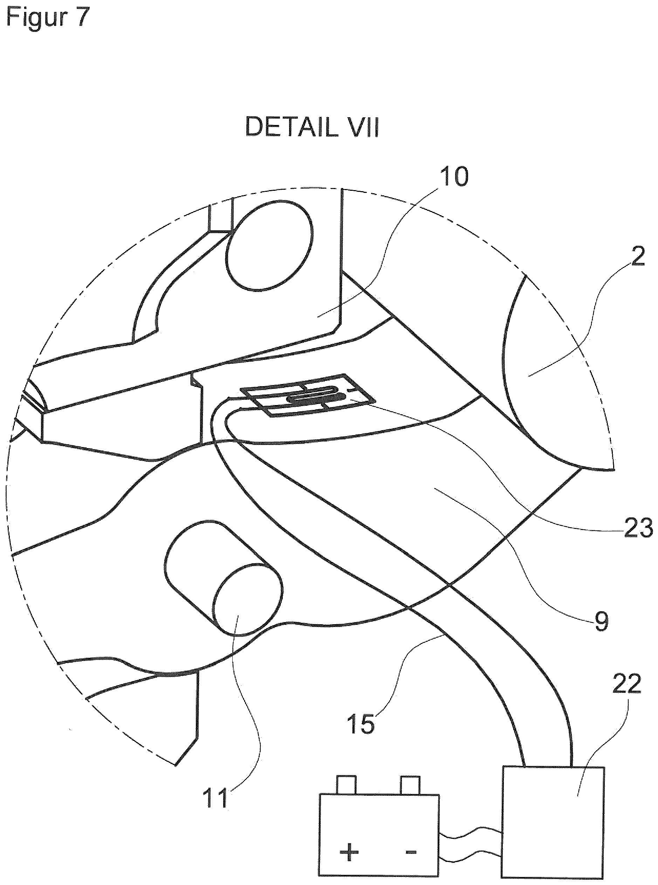

In den Figuren 6 und 7 ist eine nicht erfindungsgemäße Möglichkeit dargestellt, um die Dehnmessstreifen 23 zwischen der Krafteinspeisung an dem Werkstück 2 und der Lagerachse 11 eines der beiden äußeren Lünettenarmen 8 oder 9 vorzusehen. Dabei ist der Dehnmessstreifen 23 auf der Außenseite des Lünettenarmes 9 angebracht. In dem Bereich des Dehnstreifens 23 kann eine Schwachstelle in Form einer Nut oder dergleichen in den Lünettenarm 9 eingearbeitet sein, um die Verbiegung des Lünettenarmes 9 in diesem Bereich des Dehnmessstreifens 23 zu erhöhen und somit die Messgenauigkeit zu verbessern.

## Patentansprüche

1. Lünette (1) zur Zentrierung eines rotationssymmetrischen Werkstückes (2) bezogen auf eine Längsachse einer Bearbeitungsmaschine, bestehend aus:
- zwei zueinander beabstandeten und fest miteinander verbundenen Gehäuseschalen (4, 5),
- einem in den Gehäuseschalen (4, 5) axial beweglich gelagerten Betätigungskolben (7) zur Erzeugung einer Spannkraft (3), die auf das Werkstück (2) einwirkt,
- drei in den beiden Gehäuseschalen (4, 5) gelagerten und trieblich mit dem Betätigungskolben (7) verbundenen Lünettenarmen (8, 9, 10), durch die das Werkstück (2) an drei zueinander beabstandeten Positionen eingespannt ist, wobei die beiden äußeren Lünettenarme (8, 9) verschwenkbar an den Gehäuseschalen (4, 5) um einen Lagerbolzen (11) gehalten sind,
**dadurch gekennzeichnet,**
**dass** an mindestens einem der beiden äußeren Lünettenarmen (8, 9) eine Kraftmesseinrichtung (21) vorgesehen ist, durch die die Spannkraft (3) des jeweiligen äußeren Lünettenarmes (8, 9) während des Spannzustandes erfasst und an eine Auswerteeinrichtung (22) weitergeleitet ist, und dass die Kraftmesseinrichtung (21) aus einem der Lagerbolzen (11), der als Kraftmessachse (12) ausgestaltet ist, um den der jeweilige äußere Lünettenarm (8, 9) in einem vorgegebenen Winkelbereich verschwenkt ist und aus mindestens einem der Kraftmessachse (12) zugeordneten Dehnmessstreifen (23) gebildet ist.

2. Lünette nach Anspruch 1,
**dadurch gekennzeichnet,**
**dass** die Kraftmessachse (12) mindestens eine umlaufende Nut (13) aufweist, in der mindestens einer der Dehnmessstreifen (23) angeordnet ist, und dass der jeweilige Dehnmessstreifen (23) elektrisch über Leitungen (15) mit der Auswerteeinrichtung (22) gekoppelt ist.

3. Lünette nach Anspruch 2,
**dadurch gekennzeichnet,**
**dass** in die umlaufende Nut (13) eine oder mehrere Sacklochbohrungen (14) eingearbeitet sind und dass die Dehnmessstreifen (23) an der Seitenwand und/oder dem Boden der Sacklochbohrung (14) angeordnet sind.

4. Lünette nach Anspruch 1,
**dadurch gekennzeichnet,**
**dass** an einem oder beiden freien Enden der äußeren Lünettenarme (8, 9) eine rotierbar an diesen gelagerte Rolle (18) vorgesehen ist und dass die Lagerachse (19) der Rolle (18) als Kraftmesseinrichtung (21) ausgebildet ist.

5. Lünette nach Anspruch 4,
**dadurch gekennzeichnet,**
**dass** die Lagerachse (19) als Kraftmessachse (12) ausgestaltet ist, in die mindestens eine umlaufende Nut (13) eingearbeitet ist, und dass mindestens ein Dehnmessstreifen (23) in der Nut (13) angeordnet ist, der über elektrische Leitungen (15) mit der Auswerteeinrichtung (22) verbunden ist.

6. Lünette nach Anspruch 5,
**dadurch gekennzeichnet,**
**dass** in die jeweilige Nut (13) mindestens eine Sacklochbohrung (14) eingearbeitet ist und dass die jeweiligen Dehnmessstreifen (23) an der Wand und/oder dem Boden der Sacklochbohrung (14) angeordnet ist, bzw. sind.

7. Lünette nach einem der vorgenannten Ansprüche,
**dadurch gekennzeichnet,**
**dass** der jeweilige Dehnmessstreifen (23) im Bereich des Kraftverlaufes parallel zu diesem ausgerichtet ist.

8. Lünette nach einem der vorgenannten Ansprüche,
**dadurch gekennzeichnet,**
**dass** die axiale Zustellkraft (7') des Betätigungskolbens (7) mittels einer oder mehrerer Sensoren (24) erfasst ist und dass durch die Auswerteeinrichtung (22) die axiale Spannkraft (7') mit den von den jeweiligen Dehnmessstreifen (23) erfassten Kraftmesswerten (3) mathematisch bzw. physikalisch in Beziehung gesetzt sind.

9. Lünette nach einem der vorgenannten Ansprüche,
**dadurch gekennzeichnet,**
**dass** die elektrischen Leitungen (15) des jeweiligen Dehnmessstreifens (23) mittels eines Steckers (16) an eine Steckdose (17) lösbar gekoppelt sind und dass die Steckdose (17) über weitere elektrische Leitungen (15) mit der Auswerteeinrichtung (22) verbunden ist.

## Claims

1. A stationary support (1) for centring a rotationally symmetrical workpiece (2) in relation to a longitudinal axis of a processing machine, consisting of,
- two housing shells (4, 5) arranged at a distance from one another and firmly connected together,
- an actuating piston (7) mounted in an axially moving arrangement in the housing shells (4, 5) for generating a clamping force (3) which acts on the workpiece (2),
- three stationary support arms (8, 9, 10) in a driving connection with the actuating piston (7) mounted in the two housing shells (4, 5), by means of which the workpiece (2) is clamped at three positions spaced apart, in which case the two outer stationary support arms (8, 9) are held in a swivelling arrangement on the housing shells (4, 5) about a bearing pin (11),
**characterised in that,**
a force measuring device (21) is provided on at least one of the two outer stationary support arms (8, 9), by means of which the clamping force (3) of the particular outer stationary support arm (8, 9) is registered during the clamped condition and passed onto an evaluation device (22), and that the force measuring device (21) consists of one of the bearing pins (11) that is configured as a force measuring shaft (12) about which the particular outer stationary support arm (8, 9) is swivelled within a predefined angle range and of at least one strain gauge (23) assigned to the force measuring shaft (12).

2. The stationary support in accordance with Claim 1,
**characterised in that,**
the force measuring axis (12) has at least one circumferential groove (13) in which at least one of the strain gauges (23) is arranged, and that the corresponding strain gauge (23) is linked electrically by means of cables (15) to the evaluation device (22).

3. The stationary support in accordance with Claim 2,
**characterised in that,**
one or more blind holes (14) is/are worked into the circumferential groove (13) and that the strain gauges (23) are arranged on the side wall and/or the base of the blind hole (14).

4. The stationary support in accordance Claim 1,
**characterised in that,**
a roller (18) is provided on one or both of the free ends of the outer stationary support arms (8, 9) where it is mounted in a rotating arrangement, and that the bearing shaft (19) of the roller (18) is configured as a force measuring device (21) is.

5. The stationary support in accordance with Claim 4,
**characterised in that,**
the bearing shaft (19) is configured as a force measuring shaft (12) with at least one circumferential groove (13) worked into it, and that at least one strain gauge (23) is arranged in the groove (13) and is connected to the evaluation device (22) by means of electrical cables (15).

6. The stationary support in accordance with Claim 5,
**characterised in that,**
at least one blind hole (14) is worked into the corresponding groove (13) and that the particular strain gauge(s) (23) is or are arranged on the wall and/or base of the blind hole (14).

7. The stationary support in accordance with one of the aforementioned claims,
**characterised in that,**
the corresponding strain gauge (23) is located in the area of the force profile and is aligned in parallel with it.

8. The stationary support in accordance with one of the aforementioned claims,
**characterised in that,**
the axial advance force (7') of the actuating piston (7) is registered by means of one or more sensors (24) and that the evaluation device (22) establishes a mathematical or physical relationship between the axial clamping force (7') and the force measuring values (3) registered by the particular strain gauges (23).

9. The stationary support in accordance with one of the aforementioned claims,
**characterised in that,**
the electrical cables (15) of the corresponding strain gauge (23) are coupled to a socket (17) by means of a plug (16) in a releasable arrangement and that the socket (17) is connected to the evaluation device (22) by means of additional electrical cables (15).

## Revendications

1. Lunette (1) pour le centrage d'une pièce à usiner à symétrie de rotation (2) avec référence à l'axe longitudinal d'une machine d'usinage, comprenant :
- deux coupelles (4, 5) espacées entre elles et rigidement liées ensemble,
- un piston d'actionnement (7) logé de manière axialement mobile dans les coupelles (4, 5), qui génère la force de serrage (3) agissant sur la pièce à usiner (2),
- trois bras de lunette (8, 9, 10) logés dans les coupelles (4, 5) et liés par entraînement avec le piston d'actionnement (7), qui assurent dans trois positions espacées entre elles le serrage de la pièce à usiner (2), les deux bras de lunette extérieurs (8, 9) étant retenus de manière mobile autour d'un boulon-palier (11) dans les coupelles (4, 5),
**caractérisée en ce que**
sur au moins un des deux bras de lunette extérieurs (8, 9), il est prévu un capteur de force (21) qui, lors du serrage, saisit la force de serrage (3) du bras de lunette extérieur respectif (8, 9) et la transmet à un équipement d'évaluation (22), que le capteur de force (21) est constitué par un boulon-palier (11) formant l'axe de mesure de force (12) autour duquel pivote le bras de lunette extérieur respectif (8, 9) dans un angle défini à l'avance, et par au moins une jauge d'extensométrie (23) assignée à l'axe de mesure de force (12).

2. Lunette d'après la revendication 1,
**caractérisée en ce que**
l'axe de mesure de force (12) comprend au moins une gorge périphérique (13), dans laquelle il est placé au moins une des jauges d'extensométrie (23), et que la jauge d'extensométrie respective (23) est raccordée électriquement par des lignes (15) à l'équipement d'évaluation (22).

3. Lunette d'après la revendication 2,
**caractérisée en ce que**
dans la gorge périphérique (13), il est pratiqué un ou plusieurs trous borgnes (14), et que les jauges d'extensométrie (23) sont disposées sur la paroi latérale et/ou sur le fond du trou borgne (14).

4. Lunette d'après la revendication 1,
**caractérisée en ce que**
sur une ou sur les deux extrémités libres des bras de lunette extérieurs (8, 9), il est prévu sur celle-ci (celles-ci) un galet rotatif (18) et que l'axe de palier (19) du galet (18) forme le capteur de force (21).

5. Lunette d'après la revendication 4,
**caractérisée en ce que**
l'axe de palier (19) est conçu en tant qu'axe de mesure de force (12) dans lequel il est pratiqué au moins une gorge périphérique (13) et que dans la gorge (13), il est prévu au moins une jauge d'extensométrie (23) qui est raccordée électriquement par des lignes (15) avec l'équipement d'évaluation (22).

6. Lunette d'après la revendication 5,
**caractérisée en ce que**
dans la gorge respective (13), il est pratiqué au moins un trou borgne (14), et que les jauges d'extensométrie respectives (23) sont disposées sur la paroi latérale et/ou sur le fond du trou borgne (14).

7. Lunette d'après une des revendications précédentes,
**caractérisée en ce que**,
au niveau de l'évolution de force, la jauge d'extensométrie respective (23) est orientée parallèlement à celle-ci.

8. Lunette d'après une des revendications précédentes,
**caractérisée en ce que**
la force d'avance axiale (7') du piston d'actionnement (7) est saisie par un ou par plusieurs capteurs (24) et que l'équipement d'évaluation (22) met en relation mathématique et physique la force de serrage axiale (7') et les valeurs de force (3) saisies par la jauge d'extensométrie respective (23).

9. Lunette d'après une des revendications précédentes,
**caractérisée en ce que**
moyennant un connecteur (16) les lignes électriques (15) de la jauge d'extensométrie respective (23) sont raccordées de manière désaccouplable à une prise (17) et que la prise (17) est raccordée par d'autres lignes (15) à l'équipement d'évaluation (22).
